# EUROPEAN PATENT APPLICATION

(11) **EP 4 401 481 A1**
(43) Date of publication of application: **17.07.2024**
(21) Application number: 21961073.0
(22) Date of filing: 22.10.2021
(51) Int. Cl.: H04W 72/02, H04W 72/04

(54) **RESOURCE ALLOCATION METHOD AND APPARATUS IN MULTI-CONNECTION SCENARIO**

(71) Applicant: Huawei Technologies Co., Ltd., Shenzhen, Guangdong 518129 (CN)
(72) Inventor: WANG, Rong, Shenzhen, Guangdong 518129 (CN); XIE, Zichen, Shenzhen, Guangdong 518129 (CN); YAO, Jing, Shenzhen, Guangdong 518129 (CN)
(74) Representative: Pfenning, Meinig & Partner mbB
(86) International application number: PCT/CN2021/125816
(87) International publication number: WO 2023/065328

(57) **Abstract**

This application relates to a resource allocation method and apparatus, a device, a computer-readable storage medium, and a computer program product. In embodiments of this application, in a multi-connection scenario, a main control node indicates, by using a dynamic resource parameter, an allocated time resource to a secondary node. The main control node allocates a first time resource and a second time resource to a first secondary node and a second secondary node respectively. The first time resource does not overlap the second time resource in a time period. The main control node sends a first resource parameter indicating the first time resource and a second resource parameter indicating the second time resource to the first secondary node and the second secondary node respectively. Based on the received resource parameters, the first secondary node and the second secondary node respectively perform communication in the time period by using the first time resource and the second time resource. In this manner, scheduling flexibility is improved. This helps improve utilization of an air interface resource, further increases a retransmission opportunity of service data, and improves system reliability.

## Description

### TECHNICAL FIELD

This application mainly relates to the communication field, and more specifically, to a resource allocation method applied to a multi-connection scenario, an apparatus, a device, a computer-readable storage medium, and a computer program product.

### BACKGROUND

With increasingly wide application of consumer electronic products, there is a need for a multi-connection scenario to facilitate a user to switch between different devices. In a multi-connection scenario, a device serves as a main control node and is connected to a plurality of other devices serving as terminal nodes. For example, when serving as the main control node, a mobile phone may be simultaneously connected to a plurality of terminal nodes such as a Bluetooth headset, a tablet computer, and a large screen. In addition, one terminal node may be simultaneously connected to a plurality of main control nodes. In the multi-connection scenario, air interface resources used for communication between a main control node and a terminal node, between different terminal nodes, and between different main control nodes may conflict. Consequently, communication efficiency is affected, and user experience deteriorates.

### SUMMARY

Embodiments disclosed in this application provide a resource allocation solution.

According to a first aspect of this application, a resource allocation method applied to a multi-connection scenario is provided. In the multi-connection scenario, a main control device communicates with a first secondary device via a first connection, and communicates with a second secondary device via a second connection. The method includes: The main control device allocates a first time resource and a second time resource to the first secondary device and the second secondary device respectively. The first time resource does not overlap the second time resource in a time period. The method further includes: The main control device sends a first resource parameter indicating the first time resource and a second resource parameter indicating the second time resource to the first secondary device and the second secondary device respectively. The first resource parameter and the second resource parameter take effect in the time period.

In an embodiment of the first aspect, in a system including a plurality of secondary nodes, a main control node performs centralized and dynamic resource scheduling. In this manner, scheduling flexibility is improved. This helps improve utilization of an air interface resource, further increases a retransmission opportunity of service data, and improves system reliability. In addition, this manner allows more devices to access the system, and allows more concurrent services or more data to be sent and received in the system. That is, in this manner, a capability of the system including the plurality of secondary nodes can be improved. Improvement of the system capability facilitates coexistence of a plurality of secondary devices.

In some embodiments of the first aspect, the first time resource and the second time resource are respectively used for communication of the first secondary device and communication of the second secondary device in a transmission event periodicity. In this manner, scheduling flexibility in the transmission event periodicity can be improved.

In some embodiments of the first aspect, the first time resource is offset relative to an anchor of a transmission event of the first secondary device. Alternatively, the second time resource is offset relative to an anchor of a transmission event of the second secondary device. In this manner, a time resource can be more flexibly allocated to a secondary node, and the time resource is fully utilized.

In some embodiments of the first aspect, the sending a first resource parameter and a second resource parameter to the first secondary device and the second secondary device respectively includes: The main control device broadcasts a control frame including the first resource parameter and the second resource parameter to the first secondary device and the second secondary device. In this manner, a secondary node can be notified of a change of a resource parameter in a simple and efficient manner.

In some embodiments of the first aspect, the control frame is periodically broadcast, and a periodicity in which the first secondary device receives the control frame is an integer multiple of a periodicity in which the second secondary device receives the control frame. In this manner, a receiving periodicity can be flexibly set based on a requirement, a capability, and the like of a secondary node. This helps reduce power consumption of the secondary node.

In some embodiments of the first aspect, the sending a first resource parameter and a second resource parameter to the first secondary device and the second secondary device respectively includes: The main control device sends a first link control protocol message including the first resource parameter to the first secondary device. The main control device sends a second link control protocol message including the second resource parameter to the second secondary device. In this manner, a secondary node is notified of a change of a resource parameter in a manner of channel associated signaling, to ensure that the secondary node receives the resource parameter.

In some embodiments of the first aspect, each of the first resource parameter and the second resource parameter includes at least one of the following: an identifier of a link to which an indicated time resource is allocated, single duration of a transmission event on the link, a repetition periodicity of the transmission event, a quantity of repetition times of the transmission event, or an offset of the indicated time resource relative to an anchor of the transmission event. In this manner, an allocated resource may be described to a secondary node to facilitate the secondary node to determine a resource to be used.

In some embodiments of the first aspect, the control frame further includes at least one of the following information: a sending periodicity of the control frame, a modulation scheme of the control frame, or a frequency resource used for sending the control frame. In this manner, a secondary node is notified of a manner of sending the control frame, to prevent the secondary node from missing the control frame.

According to a second aspect of this application, a resource allocation method applied to a multi-connection scenario is provided. In the multi-connection scenario, a main control device communicates with a first secondary device via a first connection, and communicates with a second secondary device via a second connection. The method includes: The first secondary device receives a first resource parameter from the main control device. The method further includes: The first secondary device determines, based on the first resource parameter, a first time resource allocated by the main control device to the first secondary device. The first time resource does not overlap, in a time period, a second time resource that is allocated by the main control device to the second secondary device. The method further includes: The first secondary device performs communication in the time period by using the first time resource.

In an embodiment of the second aspect, in a system including a plurality of secondary nodes, a main control node performs centralized and dynamic resource scheduling. In this manner, scheduling flexibility is improved. This helps improve utilization of an air interface resource, further increases a retransmission opportunity of service data, and improves system reliability. In addition, this manner allows more devices to access the system, and allows more concurrent services or more data to be sent and received in the system. That is, in this manner, a capability of the system including the plurality of secondary nodes can be improved. Improvement of the system capability facilitates coexistence of a plurality of secondary devices.

In some embodiments of the second aspect, the first time resource is used for communication of the first secondary device in a transmission event periodicity. In this manner, scheduling flexibility in the transmission event periodicity can be improved.

In some embodiments of the second aspect, the first time resource is offset relative to an anchor of a transmission event of the first secondary device. In this manner, a time resource can be more flexibly allocated to a secondary node, and the time resource is fully utilized.

In some embodiments of the second aspect, the receiving a first resource parameter from the main control device includes: The first secondary device receives a control frame that is broadcast by the main control device and that includes the first resource parameter. In this manner, a secondary node can be notified of a change of a resource parameter in a simple and efficient manner.

In some embodiments of the second aspect, the receiving a first resource parameter from the main control device includes: The first secondary device receives, from the main control device, a link control protocol message including the first resource parameter. In this manner, a secondary node is notified of a change of a resource parameter in a manner of channel associated signaling, to ensure that the secondary node receives the resource parameter.

In some embodiments of the second aspect, the first resource parameter includes at least one of the following: an identifier of a link to which the first time resource is allocated, single duration of a transmission event on the link, a repetition periodicity of the transmission event, a quantity of repetition times of the transmission event, or an offset of the transmission event relative to an anchor of the transmission event. In this manner, an allocated resource may be described to a secondary node to facilitate the secondary node to determine a resource to be used.

In some embodiments of the second aspect, the control frame further includes at least one of the following information: a periodicity of the control frame, a modulation scheme of the control frame, or a frequency resource used for sending the control frame. In this manner, a secondary node is notified of a manner of sending the control frame, to prevent the secondary node from missing the control frame.

According to a third aspect of this application, a resource allocation apparatus is provided. The apparatus is used in or serves as a main control device in a multi-connection scenario. In the multi-connection scenario, the main control device communicates with a first secondary device via a first connection, and communicates with a second secondary device via a second connection. The apparatus includes: a processor, configured to allocate a first time resource and a second time resource to the first secondary device and the second secondary device respectively, where the first time resource does not overlap the second time resource in a time period; and a transceiver, coupled to the processor, and configured to send a first resource parameter indicating the first time resource and a second resource parameter indicating the second time resource to the first secondary device and the second secondary device respectively. The first resource parameter and the second resource parameter take effect in the time period.

In some embodiments of the third aspect, the first time resource and the second time resource are respectively used for communication of the first secondary device and communication of the second secondary device in a transmission event periodicity.

In some embodiments of the third aspect, the first time resource is offset relative to an anchor of a transmission event of the first secondary device. Alternatively, the second time resource is offset relative to an anchor of a transmission event of the second secondary device.

In some embodiments of the third aspect, the transceiver is further configured to broadcast a control frame including the first resource parameter and the second resource parameter to the first secondary device and the second secondary device.

In some embodiments of the third aspect, the control frame is periodically broadcast, and a periodicity in which the first secondary device receives the control frame is an integer multiple of a periodicity in which the second secondary device receives the control frame.

In some embodiments of the third aspect, the transceiver is further configured to: send a first link control protocol message including the first resource parameter to the first secondary device; and send a second link control protocol message including the second resource parameter to the second secondary device.

In some embodiments of the third aspect, each of the first resource parameter and the second resource parameter includes at least one of the following: an identifier of a link to which an indicated time resource is allocated, single duration of a transmission event on the link, a repetition periodicity of the transmission event, a quantity of repetition times of the transmission event, or an offset of the indicated time resource relative to an anchor of the transmission event.

In some embodiments of the third aspect, the control frame further includes at least one of the following information: a sending periodicity of the control frame, a modulation scheme of the control frame, or a frequency resource used for sending the control frame.

According to a fourth aspect of this application, a resource allocation apparatus is provided. The apparatus is used in or serves as a first secondary device in a multi-connection scenario. In the multi-connection scenario, a main control device communicates with the first secondary device via a first connection, and communicates with a second secondary device via a second connection. The apparatus includes: a transceiver, configured to receive a first resource parameter from the main control device; and a processor, coupled to the transceiver, and configured to determine, based on the first resource parameter, a first time resource allocated by the main control device to the first secondary device. The first time resource does not overlap, in a time period, a second time resource that is allocated by the main control device to the second secondary device. The transceiver is further configured to perform communication in the time period by using the first time resource.

In some embodiments of the fourth aspect, the first time resource is used for communication of the first secondary device in a transmission event periodicity. In some embodiments of the fourth aspect, the first time resource is offset relative to an anchor of a transmission event of the first secondary device.

In some embodiments of the fourth aspect, the transceiver is further configured to: The first secondary device receives a control frame that is broadcast by the main control device and that includes the first resource parameter.

In some embodiments of the fourth aspect, the transceiver is further configured to: The first secondary device receives from the main control device, a link control protocol message including the first resource parameter.

In some embodiments of the fourth aspect, the first resource parameter includes at least one of the following: an identifier of a link to which the first time resource is allocated, single duration of a transmission event on the link, a repetition periodicity of the transmission event, a quantity of repetition times of the transmission event, or an offset of the transmission event relative to an anchor of the transmission event.

In some embodiments of the fourth aspect, the control frame further includes at least one of the following information: a periodicity of the control frame, a modulation scheme of the control frame, or a frequency resource used for sending the control frame.

According to a fifth aspect of this application, an electronic device is provided, including at least one processor and at least one memory. The at least one memory is coupled to the at least one processor and stores instructions executed by the at least one processor. When the instructions are executed by the at least one processor, the device is enabled to implement the method in any implementation of the first aspect or the method in any implementation of the second aspect.

According to a sixth aspect of this application, a computer-readable storage medium is provided. The computer-readable storage medium stores one or more computer instructions, and the one or more computer instructions are executed by a processor to implement the method in any implementation of the first aspect or the method in any implementation of the second aspect.

According to a seventh aspect of this application, a computer program product is provided. When the computer program product runs on a computer, the computer is enabled to execute instructions of some or all steps of the method in any implementation of the first aspect, or instructions of some or all steps of the method in any implementation of the second aspect.

It may be understood that the electronic device in the fifth aspect, the computer storage medium in the sixth aspect, or the computer program product in the seventh aspect is all configured to perform the methods provided in the first aspect and the second aspect. Therefore, explanations or descriptions of the first aspect and the second aspect are also applicable to the fifth aspect, the sixth aspect, and the seventh aspect. In addition, for beneficial effects that can be achieved in the fifth aspect, the sixth aspect, and the seventh aspect, refer to beneficial effects in corresponding methods. Details are not described herein again.

It should be understood that content described in the summary part is not intended to limit key or important features of embodiments of this application, nor to limit the scope of this application. Other features of this application may be readily understood from the following descriptions.

### BRIEF DESCRIPTION OF DRAWINGS

The foregoing and other features, advantages, and aspects of this application become more obvious with reference to the accompanying drawings and with reference to the following detailed descriptions. In the accompanying drawings, same or similar reference numerals indicate same or similar elements.
FIG. 1A shows an example in which a plurality of secondary nodes perform communication based on fixed resource parameters;
FIG. 1B shows another example in which a plurality of secondary nodes perform communication based on fixed resource parameters;
FIG. 2 is a schematic diagram of an example environment in which a plurality of embodiments of this application can be implemented;
FIG. 3 is a signaling diagram of a resource allocation process according to an embodiment of this application;
FIG. 4 is a schematic diagram of super frames including control frames according to some embodiments of this application;
FIG. 5A shows an example in which a plurality of secondary nodes perform communication by using control frames;
FIG. 5B shows another example in which a plurality of secondary nodes perform communication by using control frames;
FIG. 6 is a signaling diagram of a resource allocation process according to some embodiments of this application;
FIG. 7 is a signaling diagram of a resource allocation process according to some other embodiments of this application;
FIG. 8 is a flowchart of a resource allocation method implemented at a main control device according to some embodiments of this application;
FIG. 9 is a flowchart of a resource allocation method implemented at a secondary device according to some embodiments of this application; and
FIG. 10 is a schematic block diagram of a device that can implement a plurality of embodiments of this application.

### DESCRIPTION OF EMBODIMENTS

The following describes embodiments of this application in detail with reference to the accompanying drawings. Although some embodiments of this application are shown in the accompanying drawings, it should be understood that this application may be implemented in various forms, and should not be construed as being limited to embodiments described herein. On the contrary, these embodiments are provided so that this application may be thoroughly and completely understood. It should be understood that the accompanying drawings and embodiments of this application are merely used as examples, but are not intended to limit the protection scope of this application.

In descriptions of embodiments of this application, the term "include" and similar terms thereof should be understood as open inclusion, that is, "include but are not limited to". The term "based on" should be understood as "at least partially based on". The terms "an embodiment" or "this embodiment" should be understood as "at least one embodiment". The terms "first", "second", and the like may indicate different or same objects. The term "and/or" represents at least one of two items associated with the term. For example, "A and/or B" indicates A, B, or A and B. Other explicit and implicit definitions may also be included below.

As used in this specification, the term "time resource" refers to any resource used for communication in time domain. The time resource may include a time unit having any suitable length, for example, but not limited to a slot.

As briefly mentioned above, in a multi-connection scenario, a main control node is simultaneously connected to a plurality of terminal nodes (also referred to as "secondary nodes" below), to schedule the plurality of secondary nodes. For example, a mobile phone is simultaneously connected to devices such as a Bluetooth headset, a tablet computer, and a large screen, and schedules these devices. However, in a current Bluetooth standard, wireless fidelity (Wi-Fi) standard, and cellular standard, there is no centralized scheduling manner for these secondary nodes. Using the Bluetooth standard as an example, each secondary node performs communication based on a fixed resource parameter indicated by the main control node. The main control node and the secondary node exchange resource allocation information in a one-to-one manner.

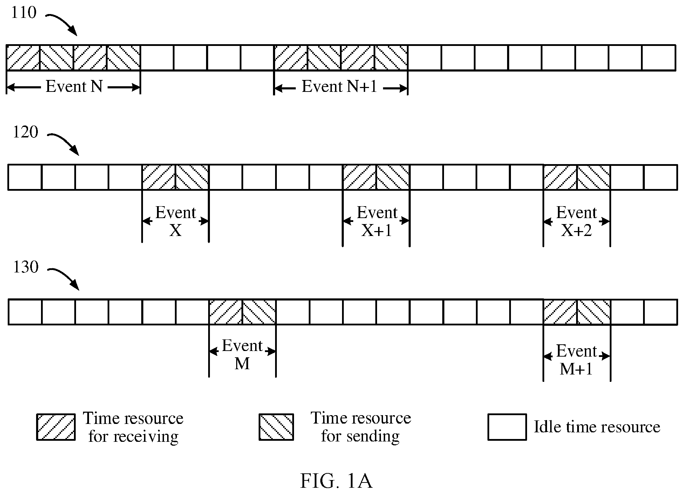

FIG. 1A shows an example in which a plurality of secondary nodes perform communication based on fixed resource parameters. In the example of FIG. 1A, one main control node simultaneously schedules three secondary nodes, and separately communicates with the three secondary nodes via links 110, 120, and 130. FIG. 1A shows allocation of air interface resources for the three secondary nodes in time domain. When each secondary node accesses the main control node, the main control node arranges start points of transmission events (also referred to as "events") of different secondary nodes on air interfaces. However, event periodicities of different secondary nodes may be different, and consequently, the air interface resources may conflict. Using the link 120 as an example, an event X+1 on the link 120 conflicts with an event N+l on the link 110, and an event X+2 on the link 120 conflicts with an event M+1 on the link 130. When the air interface resources conflict, the main control node needs to perform processing based on an event priority. A low-priority service is preempted, and a scheduling periodicity of time is prolonged.

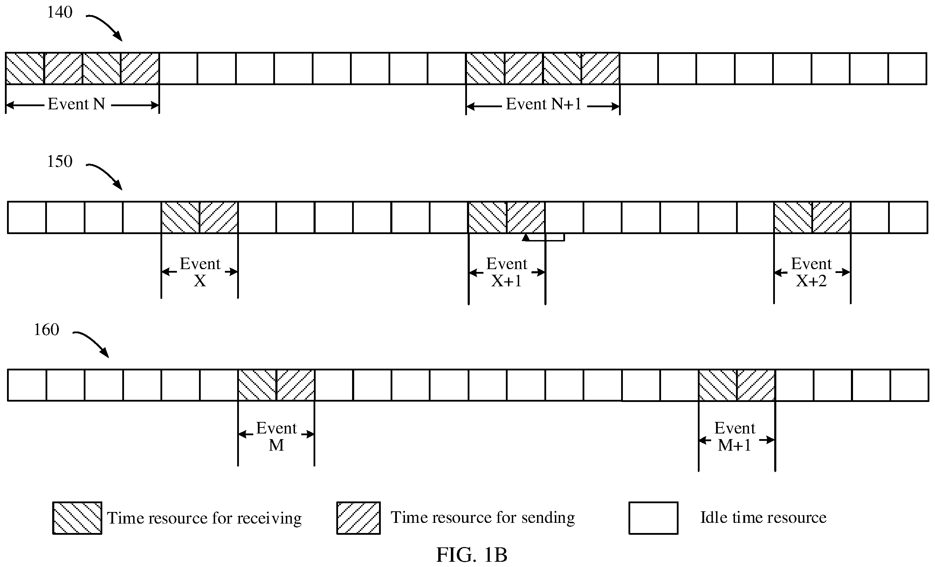

FIG. 1B shows an example in which a plurality of secondary nodes perform communication based on fixed resource parameters. In the example of FIG. 1B, one main control node simultaneously schedules three secondary nodes, and communicates with the three secondary nodes via links 140, 150, and 160 separately. FIG. 1B shows allocation of air interface resources for the three secondary nodes in time domain. After the links are established with the main control node, the three secondary nodes may only perform receiving and sending based on the fixed resource parameters. If a secondary node needs to update a resource parameter of a corresponding link due to a service requirement, the secondary node needs to update the parameter by using a link control protocol (LCP) message, that is, to perform resource reallocation. After the update, the secondary node performs communication based on an updated fixed resource parameter. Consequently, a conflict with another link may be caused. If the update causes the conflict with the another link, the update fails. In this case, the service requirement of the secondary node may not be met.

It can be learned from the foregoing example that, in a conventional solution in which centralized scheduling lacks and a fixed parameter is used, events of different secondary nodes may conflict on an air interface resource, and an idle resource is not used. Consequently, a waste of the air interface resource is caused. Amain control node may interact with only one secondary node simultaneously. When events of a plurality of secondary nodes conflict, scheduling periodicities of the events are prolonged. In addition, an update of the fixed resource parameters may fail. Consequently, service requirements of the secondary nodes may not be met.

To resolve at least a part of the foregoing problems and one or more of other potential problems, various embodiments of this application provide a resource allocation solution applied to a multi-connection scenario. In general, based on various embodiments described herein, in the multi-connection scenario, a main control node indicates, by using a dynamic resource parameter, an allocated time resource to a secondary node. The main control node communicates with a first secondary node and a second secondary node respectively via a first connection and a second connection. The main control node allocates a first time resource and a second time resource to the first secondary node and the second secondary node respectively. The first time resource does not overlap the second time resource in a time period. Then, the main control node sends a first resource parameter indicating the first time resource and a second resource parameter indicating the second time resource to the first secondary node and the second secondary node respectively. The first resource parameter and the second resource parameter may be considered as the dynamic resource parameters and take effect in the time period, so that the allocated time resources are adjusted based on fixed resource parameters. Based on the received resource parameters, the first secondary node and the second secondary node respectively perform communication by using the first time resource and the second time resource.

In embodiments of this application, in a system including a plurality of secondary nodes, the main control node performs centralized and dynamic resource scheduling. In this manner, scheduling flexibility is improved. This helps improve utilization of an air interface resource, further increases a retransmission opportunity of service data, and improves system reliability. In addition, this manner allows more devices to access the system, and allows more concurrent services or more data to be sent and received in the system. That is, in this manner, a capability of the system including the plurality of secondary nodes can be improved. Improvement of the system capability facilitates coexistence of a plurality of secondary devices (for example, different types of terminal devices).

Various example embodiments of this application are described below with reference to the accompanying drawings.

### Example environment

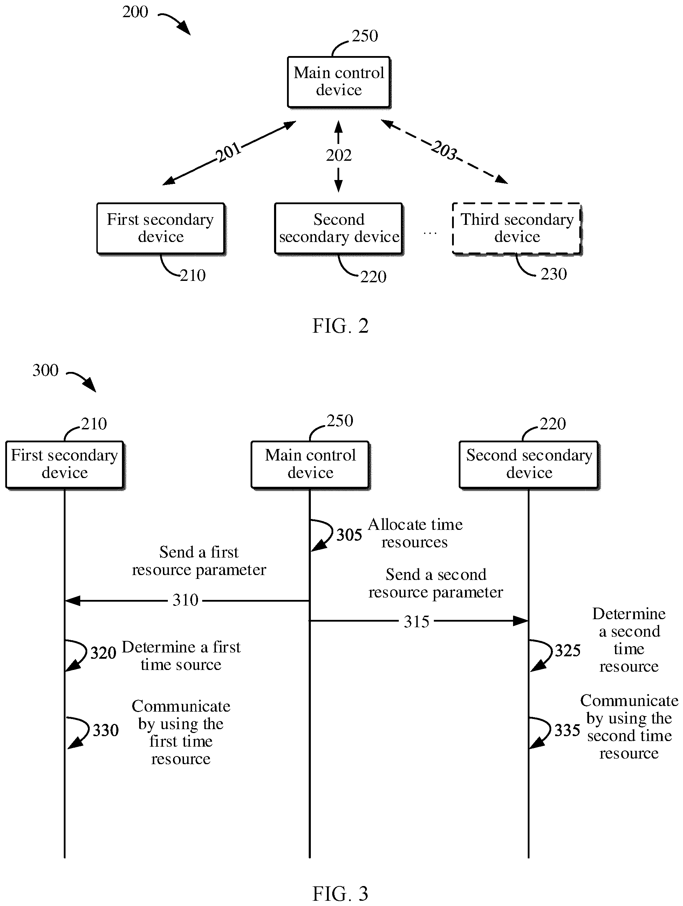

FIG. 2 is a schematic diagram of an example environment 200 in which a plurality of embodiments of this application can be implemented. FIG. 2 shows a multi-connection scenario in which a main control device separately controls a plurality of secondary devices. In general, the example environment 200 includes a main control device 250, a first secondary device 210, and a second first secondary device 210. The first secondary device 210 is controlled by the main control device 250, and a connection 201 is established between the first secondary device 210 and the main control device 250. The main control device 250 and the first secondary device 210 may communicate with each other via the connection 201. The second secondary device 220 is also controlled by the main control device 250, and a connection 202 is established between the second secondary device 220 and the main control device 250. The main control device 250 and the second secondary device 220 may communicate with each other via the connection 202.

In some embodiments, the environment 200 may further include more secondary devices, for example, a third secondary device 230. In this embodiment, the third secondary device 230 is also controlled by the main control device 250, and communicates with the main control device 250 via the connection 203. In some embodiments, the main control device 250 can receive, at one time point, data from only one of the first secondary device 210, the second main control device 220, and the third main control device 230.

The connections 201, 202, and 203 may be any suitable form of wireless connections. In an example, the connections 201, 202, and 203 are Bluetooth connections.

In the environment 200, the main control device 250 serves as a main control node, and the first secondary device 210, the second secondary device 220, and the optional third secondary device 230 serve as secondary nodes. By way of example, and not limitation of the scope of this application, the main control device 250 may be a smartphone, and the first secondary device 210, the second secondary device 220, and the optional third secondary device 230 may include one or more of a smartphone, a Bluetooth headset, a smartwatch, a portable computer, a desktop computer, a tablet computer, a large screen, and the like.

In this embodiment of this application, the main control device and the secondary device are relative, and the main control node and the secondary node are relative. The main control device may serve as a secondary node of another device. Alternatively, the secondary device may serve as a main control node to control one or more other devices. For example, in some embodiments, the second secondary device 220 may control the first secondary device 210. In this case, the first secondary device 210 is controlled by both the main control device 250 and the second secondary device 220, and the second secondary device 220 is also controlled by the main control device 250. For the first secondary device 210, both the main control device 250 and the second secondary device 220 are main control nodes. For another example, in some embodiments, the second secondary device 220 may control another device that is not shown.

It should be understood that the environment 200 shown in FIG. 2 is merely an example, and is not intended to limit the scope of this application. This embodiment of this application is applicable to an environment including any suitable quantity of devices. For example, the environment may include more devices as secondary nodes. For another example, a device serving as a secondary node may be controlled by more main control nodes.

### Example process of resource allocation

FIG. 3 is a signaling diagram of a resource allocation process 300 according to an embodiment of this application. For illustrative purposes only, the process 300 is described with reference to FIG. 2. The process 300 relates to the main control device 250, the first secondary device 210, and the second main control device 220 shown in FIG. 2. The main control device 250 serving as the main control node establishes the connection 201 with the first secondary device 210, and establishes the connection 202 with the second secondary device 220. For example, the main control device 250 separately establishes a Bluetooth connection with the first secondary device 210 and the second secondary device 220.

The main control device 250 allocates a time resource to the first secondary device 210 and the second secondary device 220 separately (305). The allocated time resources do not overlap in a time period. The time period may be one or more periodicities for sending a dynamic resource parameter described below, for example, a periodicity of a super frame. A time resource allocated to the first secondary device 210 is also referred to as a "first time resource", and a time resource allocated to the second secondary device 220 is also referred to as a "second time resource". The first time resource may be used for communication between the first secondary device 210 and the main control device 250, or used for communication between the first secondary device 210 and another secondary device (for example, the second secondary device 220 or the third secondary device 230). Similarly, the second time resource may be used for communication between the second secondary device 220 and the main control device 250, or used for communication between the second secondary device 210 and another secondary device (for example, the first secondary device 210 or the third secondary device 230).

The main control device 250 sends, at start time of the time period, a first resource parameter indicating the first time resource to the first secondary device 210 (310), and sends a second resource parameter indicating the second time resource to the second secondary device 220 (315). The first resource parameter and the second resource parameter take effect in the time period. In some embodiments, the main control device 250 sends the first resource parameter and the second resource parameter to the first device 210 and the second device 220 respectively at the start time of the time period. The start time of the time period may be a specific quantity of slots (for example, one or two slots) or duration of a specific length (for example, 10 ms) at the beginning of a time period (for example, a periodicity). Alternatively, in some embodiments, the main control device 250 may not send the first resource parameter and the second resource parameter at the start time of the time period, but may specify that the first resource parameter and the second resource parameter take effect in the time period. The first resource parameter and the second resource parameter are collectively referred to as resource parameters or dynamic resource parameters below.

A resource parameter is used to describe time resource information of a link. The resource parameter may include an identifier of a link to which a time resource is allocated. For example, when the first time resource is allocated for the communication between the first secondary device 210 and the main control device 250, the first resource parameter may include an identifier of a link between the first secondary device 210 and the main control device 250. Alternatively or additionally, the resource parameter may include single duration of a transmission event on the link, for example, duration of a continuous transmission event between two devices. Alternatively or additionally, the resource parameter may include a repetition periodicity of the transmission event on the link, for example, a time interval at which a continuous transmission event is performed between two devices. Alternatively or additionally, the resource parameter may include a quantity of repetition times of the transmission event on the link, for example, a total quantity of transmission events in the time period. Alternatively or additionally, the resource parameter may include an offset of the indicated time resource relative to an anchor of the transmission event. The "anchor" described herein refers to a start time point that is of a transmission event periodicity and that is indicated by a fixed resource parameter.

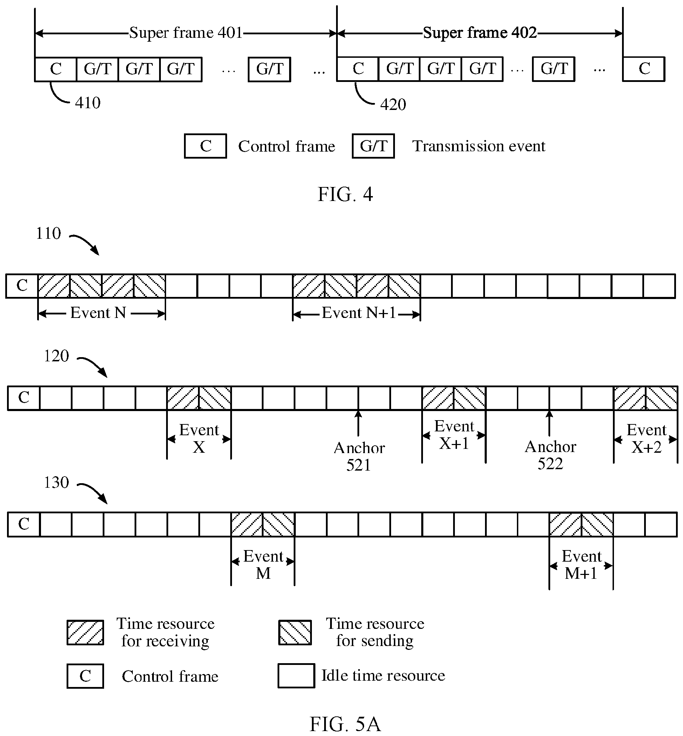

The dynamic resource parameter described above may be implemented as a control frame. The control frame is also referred to as a C frame. The control frame is sent based on a control frame periodicity. FIG. 4 is a schematic diagram of super frames including control frames according to some embodiments of this application. Each super frame includes a control frame that is at start time. Specifically, the n^{th} super frame 401 includes a control frame 410 that is at start time of the n^{th} super frame 401 and a subsequent transmission event, where G represents sending performed by a main control device and T represents sending performed by a terminal node. The (n+1)^{th} super frame 402 includes a control frame 420 that is at start time of the (n+1)^{th} super frame 402 and a subsequent transmission event.

Table 1 shows an example format of the control frame. In the control frame, a type of super frame description signaling may be 0. The super frame description signaling is used to describe a parameter of the control frame. For example, the super frame description signaling may include information about a sending periodicity of the control frame, that is, information about a super frame periodicity. Alternatively or additionally, the super frame description signaling may include information about a modulation scheme of the control frame, for example, a PHY type of the control frame. Alternatively or additionally, the super frame description signaling may include information about a frequency resource used for sending the control frame, for example, a frequency hopping map (channel map) indicating a frequency point on which the control frame is to be sent. In the control frame, a type of link time description signaling may be 1. The link time description signaling is used to describe a time resource allocated to a link, that is, the link time description signaling may include one or more of the resource parameters described above.

The control frame may include one or both of the super frame description signaling and the link time description signaling. For example, only changed signaling may be included in the control frame. Content included in the control frame shown in Table 1 is merely an example, and is not intended to limit the scope of this disclosure. The format and the content of the control frame are not limited to the example shown in Table 1.

**Table 1 Example format of the control frame**

| Type | Signaling type |
|---|---|
| 0 | Super frame description signaling |
| 1 | Link time description signaling |
| Another | Reserved |

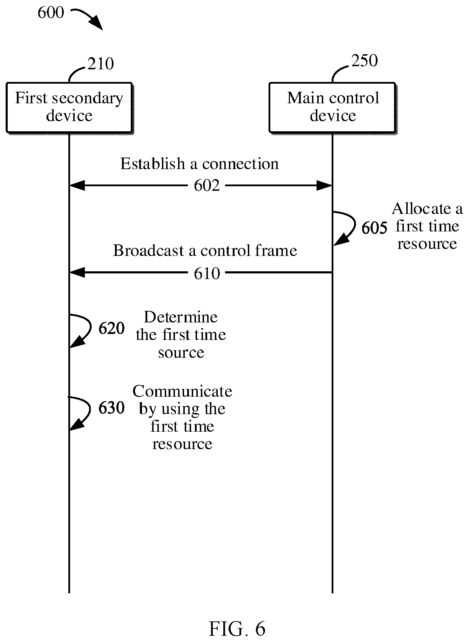

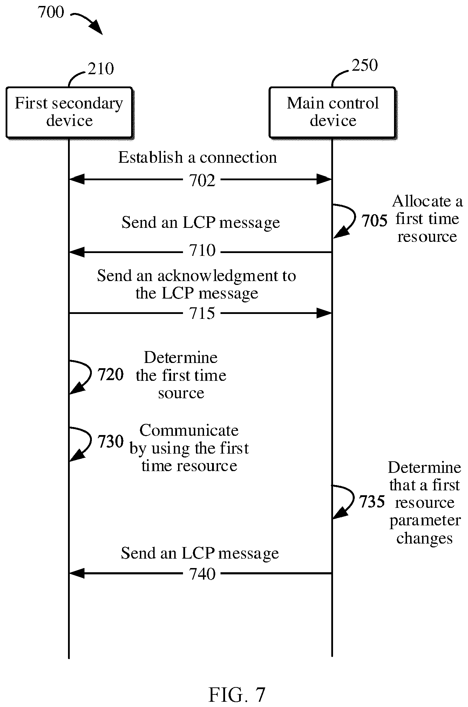

A link used for sending the control frame, also referred to as a C link, may be defined as a transmission link of on which a main control node sends, in a super frame, media access control (MAC) layer control signaling formed by a control frame. In some embodiments, the main control device 250 may send the control frame in a broadcast form. For example, the C link may perform frequency hopping in a manner of intra-network broadcast adaptive frequency hopping, and control allocation and scheduling of a link (for example, a link between a main control device and a secondary device) between devices in the super frame by using broadcast signaling. These embodiments are described below with reference to FIG. 6. Alternatively, in some embodiments, the main control device 250 may send the control frame in a form of channel associated signaling. These embodiments are described below with reference to FIG. 7.

Continue to refer to FIG. 3. The first secondary device 210 determines the first time resource based on the received first resource parameter (320). For example, the first secondary device 210 determines, based on the control frame, an interval at which a transmission event is performed in a super frame periodicity, duration of each transmission event, and the like. Based on this, the first secondary device 210 communicates by using the determined first time resource (330). For example, if the first time resource is allocated to the link between the main control device 250 and the first secondary device 210, the first secondary device 210 communicates with the main control device 250 by using the determined time resource, to receive data from the main control device 250 or send data to the main control device 250. For another example, if the second time resource is allocated to a link between the second secondary device 220 and the first secondary device 210, the second secondary device 220 communicates with the first secondary device 210 by using the determined time resource.

Correspondingly, the second secondary device 220 determines the second time resource based on the received second resource parameter (325). For example, the second secondary device 220 determines, based on the control frame, an interval at which a transmission event is performed in a super frame periodicity, duration of each transmission event, and the like. Based on this, the second secondary device 220 communicates by using the determined second time resource (335). For example, if the second time resource is allocated to the link between the main control device 250 and the second secondary device 220, the second secondary device 220 communicates with the main control device 250 by using the determined time resource, to receive data from the main control device 250 or send data to the main control device 250.

FIG. 5A shows an example in which a plurality of secondary nodes perform communication by using control frames. It can be learned from comparison between FIG. 5A and FIG. 1A that, by using the control frame, a main control node may reallocate a time resource of a secondary node, to move a start point of an event in a scheduling periodicity. The secondary node only needs to perform receiving and sending based on an indication of the main control node. For example, an event X+1 on a link 120 is two time units backward offset relative to an anchor 521, and an event X+2 on the link 120 is two time units backward offset relative to an anchor 522. By using the control frame, that is, by using a dynamic resource parameter, conflicts that originally exist between the link 120 and the link 110 and between the link 120 and the link 130 are eliminated.

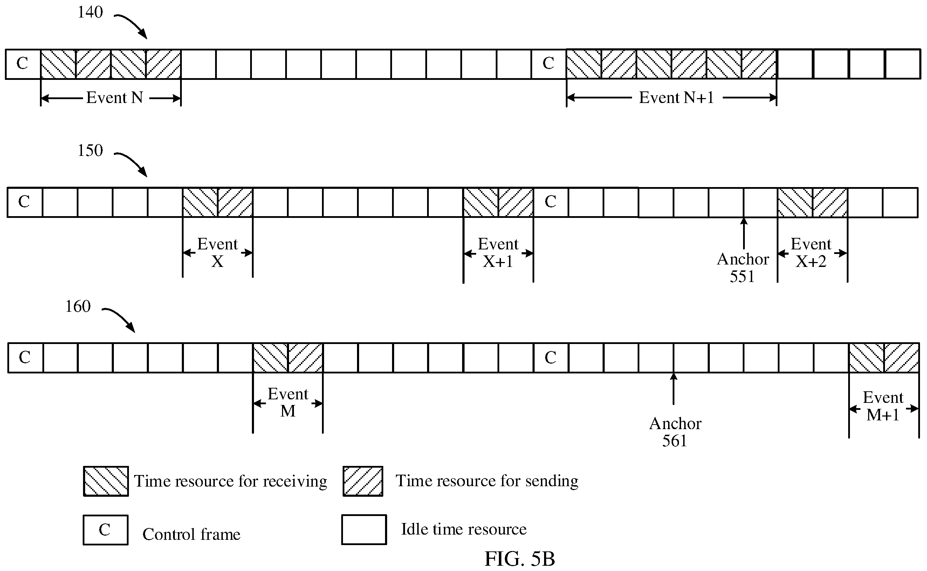

FIG. 5B shows another example in which a plurality of secondary nodes perform communication by using control frames. FIG. 5B is compared with FIG. 1B. In FIG. 1B, receiving and sending are originally performed twice on a link 140 within an event N. Due to a service requirement, receiving and sending are expected to be performed three times on the link 140 within one event. In FIG. 5B, by using the control frame, receiving and sending may be performed three times on the link 140 within an event N+1. In addition, a main control node moves events on a link 150 and a link 160 backwards by using the control frame, to ensure that the events do not conflict with the event on the link 150. For example, an event X+2 on the link 150 is one time unit backward offset relative to an anchor 551, and an event M+1 on the link 160 is five time units backward offset relative to an anchor 561. By using the control frame, that is, by using a dynamic resource parameter, a time resource parameter of a link is flexibly changed, and it is ensured that no conflict exists between links after the change.

It should be understood that, when the main control device 250 controls more than two secondary devices, the process 300 may also involve another device. For example, the third secondary device 230 shown in FIG. 2 may perform an operation similar to that of the first secondary device 210 or the second secondary device 230.

### Example process of sending a control frame in a broadcast form

As mentioned above, in some embodiments, the main control device 250 may send the control frame in the broadcast form. These embodiments are described below with reference to FIG. 6. FIG. 6 is a signaling diagram of a resource allocation process 600 according to some embodiments of this application. The process 600 may be considered as an example implementation of an interaction part of the main control device 250 with the first secondary device 210 in the process 300.

As shown in FIG. 6, a first secondary device 210 establishes a connection 201 with a main control device 250 (602). The main control device 250 allocates a first time resource to the first secondary device 210 (605). The first time resource does not overlap, in at least one periodicity of a control frame, a time resource that is allocated by the main control device 250 to another secondary device. The another secondary device includes, for example, a second secondary device 220 and a third secondary device 230.

The main control device 250 broadcasts, based on the periodicity of the control frame, the control frame to a controlled secondary device at start time of the periodicity, where the control frame includes a first resource parameter indicating the first time resource. For example, the first time resource may be used for communication between the main control device 250 and the first secondary device 210. In this case, the first resource parameter may include an identifier of a link between the first secondary device 210 and the main control device 250, single duration of a transmission event on the link, a repetition periodicity of the transmission event on the link, a quantity of repetition times of the transmission event, an offset of an indicated time resource relative to an anchor of the transmission event, and the like. After allocating the first time resource, the main control device 250 may fill the resource parameter into the control frame, and broadcast the control frame at the start time of the periodicity. The control frame may further include a parameter used to describe the control frame, for example, super frame description signaling.

The first secondary device 210 receives the control frame broadcast by the main control device 250, and obtains the first resource parameter from the control frame. The first secondary device 210 determines, based on the first resource parameter, the allocated first time resource (620). The first secondary device 210 communicates by using the first time resource (630). For example, when the first time resource is used for communication between the main control device 250 and the first secondary device 210, the first secondary device 210 interacts with the main control device 250 in an allocated slot, to receive data from the main control device 250 or send data to the main control device 250.

In the process 600, an example in which the first secondary device 210 serves as a secondary node is used to describe sending the control frame in the broadcast form. It should be understood that a similar process is applicable to the another secondary device, for example, the second secondary device 220 or the third secondary device 230.

In some embodiments, periodicities of control frames on different links or for different secondary devices may be different. For example, the periodicities may be in an integer multiple relationship. As a result, a control frame sent at first time includes resource parameters for all secondary devices, and a control frame broadcast at second time that is different includes only resource parameters for a part of the secondary devices. In an example, a periodicity of a control frame for the first secondary device 210 may be m slots, and a periodicity of a control frame for the second secondary device 220 may be 2m slots, where m is an integer greater than or equal to 1. In this case, a control frame broadcast by the main control device 250 in the m^{th} slot, the 3m^{th} slot, the 5m^{th} slot, or the like includes only a resource parameter for the first secondary device 210, and a control frame broadcast in the 2m^{th} slot, the 4m^{th} slot, the 6m^{th} slot, or the like includes the resource parameter for the first secondary device 210 and a resource parameter for the second secondary device 220. In the m^{th} slot, the 3m^{th} slot, the 5m^{th} slot, or the like, the second secondary device 220 may not decode the control frame from the main control device 250. In the 2m^{th} slot, the 4m^{th} slot, the 6m^{th} slot, or the like, the first secondary device 210 and the second secondary device 220 respectively obtains, from the control frame through decoding, the resource parameter for the first secondary device 210 and the resource parameter for the second secondary device 220. In this embodiment, corresponding control frame periodicities may be set for different secondary nodes based on service requirements, receiving capabilities, and the like of the secondary nodes. This helps reduce power consumption of the secondary nodes.

### Example process of sending a control frame in a form of channel associated signaling

As mentioned above, in some embodiments, the main control device 250 may send the control frame in the form of channel associated signaling. The main control device 250 may send the control frame to a secondary device in a form of an LCP message. These embodiments are described below with reference to FIG. 7. FIG. 7 is a signaling diagram of a resource allocation process 700 according to some other embodiments of this application. The process 700 may be considered as an example implementation of an interaction part of the main control device 250 with the first secondary device 210 in the process 300.

As shown in FIG. 7, a first secondary device 210 establishes a connection 201 with a main control device 250 (702). The main control device 250 allocates a first time resource to the first secondary device 210 (705). The first time resource does not overlap, in at least one periodicity of a control frame, a time resource that is allocated by the main control device 250 to another secondary device. The another secondary device includes, for example, a second secondary device 220 and a third secondary device 230.

The main control device 250 sends an LCP message to the first secondary device 210 (710). The LCP message includes a first resource parameter indicating the first time resource. For example, the first time resource may be used for communication between the main control device 250 and the first secondary device 210. In this case, the first resource parameter may include an identifier of a link between the first secondary device 210 and the main control device 250, single duration of a transmission event on the link, a repetition periodicity of the transmission event on the link, a quantity of repetition times of the transmission event, an offset of an indicated time resource relative to an anchor of the transmission event, and the like. After allocating the first time resource, the main control device 250 may fill the resource parameter into the LCP message.

Although the resource parameter is sent in a form of a channel associated signaling LCP message, in some embodiments, the LCP message may also have a periodicity feature of the control frame described above. Correspondingly, the LCP message including the dynamic resource parameter may be sent based on the periodicity of the control frame at the start time of the periodicity. Alternatively, in some other embodiments, the LCP message may not be sent at the start time, but an effective time point of an LCP may be specified. In the 1^{st} periodicity after the effective time point, the resource parameter indicated by the LCP message takes effect, that is, communication is performed based on the resource parameter. In addition, the LCP message may also include a parameter used to describe the control frame, for example, information about a sending periodicity of the control frame, information about a modulation scheme of the control frame, or information about a frequency resource used for sending the control frame.

The first secondary device 210 receives the LCP message from the main control device 250, and parses the LCP message to obtain the first resource parameter. The first secondary device 210 sends an acknowledgment to the LCP message to the main control device 250 (715). The first secondary device 210 determines, based on the obtained first resource parameter, the allocated first time resource (720). The first secondary device 210 communicates by using the first time resource (730). For example, when the first time resource is used for communication between the main control device 250 and the first secondary device 210, the first secondary device 210 interacts with the main control device 250 in an allocated slot, to receive data from the main control device 250 or send data to the main control device 250.

The main control device 250 determines that the first resource parameter changes (735). For example, due to a service requirement of the first secondary device 210, or because a resource allocated to another secondary device changes, the first resource parameter may change to avoid a conflict. The main control device 250 sends an LCP message to the first secondary device 210 (740). The LCP message includes a changed first resource parameter. The LCP message may be sent at the start time of the periodicity based on the periodicity of the control frame. Alternatively, the LCP message may be sent at another time, and an effective time point of the resource parameter is specified.

In the process 700, an example in which the first secondary device 210 serves as a secondary node is used to describe sending the control frame in the broadcast form. It should be understood that a similar process is applicable to the another secondary device, for example, the second secondary device 220 or the third secondary device 230.

### Example method and device

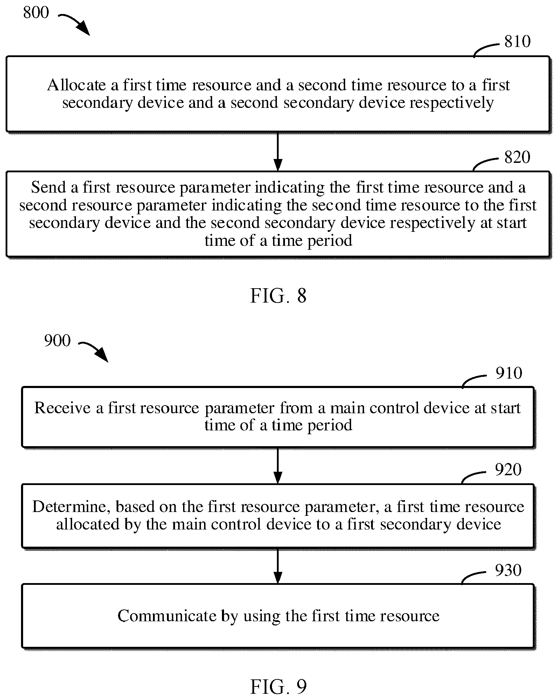

FIG. 8 is a flowchart of a resource allocation method 800 implemented at a main control device according to some embodiments of this application. The method 800 is applied to, for example, the multi-connection scenario shown in FIG. 2. In the multi-connection scenario, the main control device 250 communicates with the first secondary device 210 via the first connection, and communicates with the second secondary device 220 via the second connection. The method 800 may be implemented by the main control device 250. For ease of description, the method 800 is described below with reference to FIG. 2.

In block 810, the main control device 250 allocates a first time resource and a second time resource to the first secondary device 210 and the second secondary device 220 respectively. The first time resource does not overlap the second time resource in a time period.

In some embodiments, the first time resource and the second time resource are respectively used for communication of the first secondary device 210 and communication of the second secondary device 220 in a transmission event periodicity. In some embodiments, the first time resource is offset relative to an anchor of a transmission event of the first secondary device 210. Alternatively, the second time resource is offset relative to an anchor of a transmission event of the second secondary device 220.

In block 820, the main control device 250 sends a first resource parameter indicating the first time resource and a second resource parameter indicating the second time resource to the first secondary device 210 and the second secondary device 220 respectively. The first resource parameter and the second resource parameter take effect in the time period.

In some embodiments, the main control device 250 may broadcast a control frame including the first resource parameter and the second resource parameter to the first secondary device 210 and the second secondary device 220. In some embodiments, the control frame is periodically broadcast, and a periodicity in which the first secondary device 210 receives the control frame is an integer multiple of a periodicity in which the second secondary device 220 receives the control frame.

In some embodiments, the main control device 250 may send a first link control protocol message including the first resource parameter to the first secondary device 210. The main control device 250 may send a second link control protocol message including the second resource parameter to the second secondary device 220.

In some embodiments, each of the first resource parameter and the second resource parameter includes at least one of the following: an identifier of a link to which an indicated time resource is allocated, single duration of a transmission event on the link, a repetition periodicity of the transmission event, a quantity of repetition times of the transmission event, or an offset of the indicated time resource relative to an anchor of the transmission event.

In some embodiments, the control frame further includes at least one of the following information: a sending periodicity of the control frame, a modulation scheme of the control frame, or a frequency resource used for sending the control frame.

FIG. 9 is a flowchart of a resource allocation method 900 implemented at a secondary device according to some embodiments of this application. The method 900 is applied to, for example, the multi-connection scenario shown in FIG. 2. In the multi-connection scenario, the main control device 250 communicates with the first secondary device 210 via the first connection, and communicates with the second secondary device 220 via the second connection. The method 800 may be implemented by the first secondary device 210. For ease of description, the method 900 is described below with reference to FIG. 2.

In block 910, the first secondary device 210 receives a first resource parameter from the main control device 250. In some embodiments, the first secondary device 210 may receive a control frame that includes the first resource parameter and that is broadcast by the main control device 250. In some embodiments, the first secondary device 210 may receive, from the main control device 250, a link control protocol message including the first resource parameter.

In block 920, the first secondary device 210 determines, based on the first resource parameter, a first time resource allocated by the main control device 250 to the first secondary device 210. The first time resource does not overlap, in a time period, a second time resource that is allocated by the main control device 250 to the second secondary device 220. In block 930, the first secondary device 210 performs communication in the time period by using the first time resource.

In some embodiments, the first time resource is used for communication of the first secondary device 210 in a transmission event periodicity. In some embodiments, the first time resource is offset relative to an anchor of a transmission event of the first secondary device 210.

In some embodiments, the first resource parameter includes at least one of the following: an identifier of a link to which the first time resource is allocated, single duration of a transmission event on the link, a repetition periodicity of the transmission event, a quantity of repetition times of the transmission event, or an offset of the transmission event relative to an anchor of the transmission event.

In some embodiments, the control frame further includes at least one of the following information: a periodicity of the control frame, a modulation scheme of the control frame, or a frequency resource used for sending the control frame.

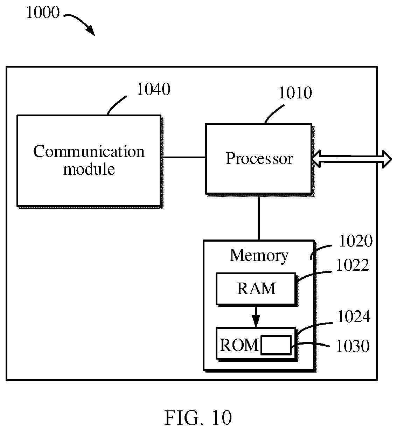

FIG. 10 is a schematic block diagram of an example device 1000 that can be used to implement an embodiment of this application. The device 1000 may be implemented as or included in the main control device 250, the first secondary device 210, the second secondary device 220, or the optional third secondary device 230 in FIG. 2. As shown, the device 1000 includes one or more processors 1010, one or more memories 1020 coupled to the processor 1010, and a communication module 1040 coupled to the processor 1010.

The communication module 1040 may be configured to perform bidirectional communication. The communication module 1040 may have at least one communication interface for communication. The communication interface may include any interface necessary for communicating with another device.

The processor 1010 may be of any type suitable for a local technology network, and may include but is not limited to at least one of the following: one or more of a general-purpose computer, a dedicated computer, a microcontroller, a digital signal processor (Digital Signal Processor, DSP), or a controller-based multi-core controller architecture. The device 1000 may have a plurality of processors, such as application-specific integrated circuit chips, which belong to a clock synchronized with a main processor in terms of time.

The memory 1020 may include one or more nonvolatile memories and one or more volatile memories. An example of the nonvolatile memory includes but is not limited to at least one of the following: a read-only memory (Read-Only Memory, ROM) 1024, an erasable programmable read-only memory (Erasable Programmable Read-Only Memory, EPROM), a flash memory, a hard disk, a compact disc (Compact Disc, CD), a digital versatile disc (Digital Versatile Disc, DVD), or another magnetic storage and/or optical storage. An example of the volatile memory includes but is not limited to at least one of the following: a random access memory (RAM) 1022, or another volatile memory that does not last for power-off duration.

A computer program 1030 includes computer-executable instructions executed by the associated processor 1010. The program 1030 may be stored in the ROM 1024. The processor 1010 may perform any appropriate action and processing by loading the program 1030 into the RAM 1022.

Embodiments of this disclosure may be implemented by using the program 1030, so that the device 1000 can perform any process discussed with reference to FIG. 8 and FIG. 9. Embodiments of this disclosure may alternatively be implemented by using hardware or a combination of software and hardware.

The program 1030 may be tangibly included in a computer-readable medium, and the computer-readable medium may be included in the device 1000 (for example, in the memory 1020) or another storage device that can be accessed by the device 1000. The program 1030 may be loaded from the computer-readable medium into the RAM 1022 for execution. The computer-readable medium may include any type of tangible nonvolatile memory, such as a ROM, an EPROM, a flash memory, a hard disk, a CD, or a DVD.

In some embodiments, the communication module 1040 in the device 1000 may be implemented as a transmitter and a receiver (or a transceiver), and may be configured to send/receive information such as first space-related information and second space-related information. In addition, the device 1000 may further include one or more of a scheduler, a controller, and a radio frequency/antenna. Details are not described again in this disclosure.

For example, the device 1000 in FIG. 10 may be implemented as an electronic device, or may be implemented as a chip or a chip system in an electronic device. This is not limited in this embodiment of this disclosure.

An embodiment of this disclosure further provides a chip. The chip may include an input interface, an output interface, and a processing circuit. In this embodiment of this disclosure, the input interface and the output interface may complete interaction of signaling or data, and the processing circuit may complete generation and processing of signaling or data information.

An embodiment of this disclosure further provides a chip system, including a processor. The processor is configured to support a computing device in implementing a function in any one of the foregoing embodiments. In a possible design, the chip system may further include a memory. The memory is configured to store necessary program instructions and data. When the processor runs the program instructions, a device on which the chip system is installed is enabled to perform the method in any one of the foregoing embodiments. For example, the chip system may be formed by one or more chips, or may include a chip and another discrete device.

An embodiment of this disclosure further provides a processor, configured to be coupled to a memory. The memory stores instructions. When the processor runs the foregoing instructions, the processor is enabled to perform the method and the function in any one of the foregoing embodiments.

An embodiment of this disclosure further provides a computer program product including instructions. When the computer program product runs on a computer, the computer is enabled to perform the method and the function in any one of the foregoing embodiments.

An embodiment of this disclosure further provides a computer-readable storage medium, where the computer-readable storage medium stores computer instructions. When a processor runs the foregoing instructions, the processor is enabled to perform the method and the function in any one of the foregoing embodiments.

Generally, various embodiments of this disclosure may be implemented by hardware or a dedicated circuit, software, logic, or any combination thereof. Some aspects may be implemented by hardware, and other aspects may be implemented by firmware or software, and may be performed by a controller, a microprocessor, or another computing device. Although aspects of embodiments of this disclosure are shown and illustrated as block diagrams, flowcharts, or another diagram, it should be understood that the blocks, apparatuses, systems, technologies, or methods described in this specification may be implemented as, for example, non-limiting examples, hardware, software, firmware, dedicated circuits, logic, general-purpose hardware, controllers, another computing device, or a combination thereof.

This disclosure further provides at least one computer program product tangibly stored on a non-transitory computer-readable storage medium. The computer program product includes computer-executable instructions, such as instructions included in a program module, executed in a device on a real or virtual target processor to perform the process/method in the accompanying drawings described above. Generally, the program module includes a routine, a program, a library, an object, a class, a component, a data structure, and the like that execute a particular task or implement a particular abstract data type. In various embodiments, functions of program modules may be combined or a function of a program module may be split as needed. Machine-executable instructions for the program module may be executed locally or within a distributed device. In the distributed device, the program modules may be located in local and remote storage media.

Computer program code used to implement the methods disclosed in this disclosure may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed all on a computer, partially on a computer, as an independent software package, partially on a computer and partially on a remote computer, or all on a remote computer or server.

In a context of this disclosure, the computer program code or related data may be carried by any appropriate carrier, so that a device, an apparatus, or a processor can perform various processing and operations described above. An example of the carrier includes a signal, a computer-readable medium, and the like. An example of the signal may include a propagating signal in electrical, optical, radio, sound, or another form, such as a carrier wave and an infrared signal.

The computer-readable medium may be any tangible medium that includes or stores a program used for or related to an instruction execution system, apparatus, or device. The computer-readable medium may be a computer-readable signal medium or a computer-readable storage medium. The computer-readable medium may include but is not limited to an electronic, magnetic, optical, electromagnetic, infrared, or semiconductor system, apparatus, or device, or any suitable combination thereof. More detailed examples of the computer-readable storage medium include an electrical connection with one or more wires, a portable computer disk, a hard disk, a random access memory (RAM), a read-only memory (ROM), an erasable programmable read-only memory (EPROM or flash memory), an optical storage device, a magnetic storage device, or any suitable combination thereof.

In addition, although the operations of the methods disclosed in this disclosure are described in a particular order in the accompanying drawings, this does not require or imply that these operations need to be performed in the particular order or that all of the shown operations need to be performed to achieve a desired result. Instead, execution orders of the steps depicted in the flowcharts may change. Additionally or alternatively, some steps may be omitted, a plurality of steps may be combined into one step for execution, and/or one step may be decomposed into a plurality of steps for execution. It should further be noted that features and functions of two or more apparatuses according to this disclosure may be specified in one apparatus. On the contrary, features and functions of one apparatus described above may be further divided into a plurality of apparatuses for materialization.

The implementations of this disclosure are described above. The foregoing descriptions are examples, are not exhaustive, and are not limited to the disclosed implementations. Many modifications and variations are apparent to a person of ordinary skill in the art without departing from the scope and spirit of the described implementations. Selection of terms used in this specification is intended to well explain implementation principles, actual application, or improvements to technologies in the market, or to enable another person of ordinary skill in the art to understand the implementations disclosed in this specification.

## Claims

1. A resource allocation method applied to a multi-connection scenario, wherein in the multi-connection scenario, a main control device communicates with a first secondary device via a first connection, and communicates with a second secondary device via a second connection, and the method comprises:
allocating, by the main control device, a first time resource and a second time resource to the first secondary device and the second secondary device respectively, wherein the first time resource does not overlap the second time resource in a time period; and
sending, by the main control device, a first resource parameter indicating the first time resource and a second resource parameter indicating the second time resource to the first secondary device and the second secondary device respectively, wherein the first resource parameter and the second resource parameter take effect in the time period.

2. The method according to claim 1, wherein the first time resource and the second time resource are respectively used for communication of the first secondary device and communication of the second secondary device in a transmission event periodicity.

3. The method according to claim 1 or 2, wherein the first time resource is offset relative to an anchor of a transmission event of the first secondary device, or the second time resource is offset relative to an anchor of a transmission event of the second secondary device.

4. The method according to any one of claims 1 to 3, wherein the sending a first resource parameter and a second resource parameter to the first secondary device and the second secondary device respectively comprises:
broadcasting, by the main control device, a control frame comprising the first resource parameter and the second resource parameter to the first secondary device and the second secondary device.

5. The method according to claim 4, wherein the control frame is periodically broadcast, and a periodicity in which the first secondary device receives the control frame is an integer multiple of a periodicity in which the second secondary device receives the control frame.

6. The method according to any one of claims 1 to 3, wherein the sending a first resource parameter and a second resource parameter to the first secondary device and the second secondary device respectively comprises:
sending, by the main control device, a first link control protocol message comprising the first resource parameter to the first secondary device; and
sending, by the main control device, a second link control protocol message comprising the second resource parameter to the second secondary device.

7. The method according to any one of claims 1 to 6, wherein each of the first resource parameter and the second resource parameter comprises at least one of the following:
an identifier of a link to which an indicated time resource is allocated,
single duration of a transmission event on the link,
a repetition periodicity of the transmission event,
a quantity of repetition times of the transmission event, or
an offset of the indicated time resource relative to an anchor of the transmission event.

8. The method according to claim 4, wherein the control frame further comprises at least one of the following information:
a sending periodicity of the control frame,
a modulation scheme of the control frame, or
a frequency resource for sending the control frame.

9. A resource allocation method applied to a multi-connection scenario, wherein in the multi-connection scenario, a main control device communicates with a first secondary device via a first connection, and communicates with a second secondary device via a second connection, and the method comprises:
receiving, by the first secondary device, a first resource parameter from the main control device;
determining, by the first secondary device based on the first resource parameter, a first time resource allocated by the main control device to the first secondary device, wherein the first time resource does not overlap, in a time period, a second time resource that is allocated by the main control device to the second secondary device; and
performing, by the first secondary device, communication in the time period by using the first time resource.

10. The method according to claim 9, wherein the first time resource is offset relative to an anchor of a transmission event of the first secondary device.

11. A resource allocation apparatus, wherein the apparatus is used in or serves as a main control device in a multi-connection scenario, wherein in the multi-connection scenario, the main control device communicates with a first secondary device via a first connection and communicates with a second secondary device via a second connection, and the apparatus comprises:
a processor, configured to allocate a first time resource and a second time resource to the first secondary device and the second secondary device respectively, wherein the first time resource does not overlap the second time resource in a time period; and
a transceiver, coupled to the processor, and configured to send a first resource parameter indicating the first time resource and a second resource parameter indicating the second time resource to the first secondary device and the second secondary device respectively, wherein the first resource parameter and the second resource parameter take effect in the time period.

12. The apparatus according to claim 11, wherein the first time resource and the second time resource are respectively used for communication of the first secondary device and communication of the second secondary device in a transmission event periodicity.

13. The apparatus according to claim 11 or 12, wherein the first time resource is offset relative to an anchor of a transmission event of the first secondary device, or the second time resource is offset relative to an anchor of a transmission event of the second secondary device.

14. The apparatus according to any one of claims 11 to 13, wherein the transceiver is further configured to:
broadcast a control frame comprising the first resource parameter and the second resource parameter to the first secondary device and the second secondary device.

15. The apparatus according to claim 14, wherein the control frame is periodically broadcast, and a periodicity in which the first secondary device receives the control frame is an integer multiple of a periodicity in which the second secondary device receives the control frame.

16. The apparatus according to any one of claims 11 to 13, wherein the transceiver is further configured to:
send a first link control protocol message comprising the first resource parameter to the first secondary device; and
send a second link control protocol message comprising the second resource parameter to the second secondary device.

17. The apparatus according to any one of claims 11 to 16, wherein each of the first resource parameter and the second resource parameter comprises at least one of the following:
an identifier of a link to which an indicated time resource is allocated,
single duration of a transmission event on the link,
a repetition periodicity of the transmission event,
a quantity of repetition times of the transmission event, or
an offset of the indicated time resource relative to an anchor of the transmission event.

18. The apparatus according to claim 14, wherein the control frame further comprises at least one of the following information:
a sending periodicity of the control frame,
a modulation scheme of the control frame, or
a frequency resource for sending the control frame.

19. A resource allocation apparatus, wherein the apparatus is used in or serves as a first secondary device in a multi-connection scenario, wherein in the multi-connection scenario, a main control device communicates with the first secondary device via a first connection and communicates with a second secondary device via a second connection, and the apparatus comprises:
a transceiver, configured to receive a first resource parameter from the main control device; and
a processor, coupled to the transceiver, and configured to determine, based on the first resource parameter, a first time resource allocated by the main control device to the first secondary device, wherein the first time resource does not overlap, in a time period, a second time resource that is allocated by the main control device to the second secondary device; and
the transceiver is further configured to perform communication in the time period by using the first time resource.

20. The apparatus according to claim 19, wherein the first time resource is offset relative to an anchor of a transmission event of the first secondary device.

21. A computer-readable storage medium, wherein the computer-readable storage medium stores a computer program, and when the program is executed by a processor, the method according to any one of claims 1 to 8 is implemented, or the method according to either of claims 9 and 10 is implemented.

22. A computer program product, comprising computer-executable instructions, wherein when the computer-executable instructions are executed by a processor, the method according to any one of claims 1 to 8 is implemented, or the method according to either of claims 9 and 10 is implemented.
